# EUROPEAN PATENT APPLICATION

(11) **EP 4 080 425 A1**
(43) Date of publication of application: **26.10.2022**
(21) Application number: 22164686.2
(22) Date of filing: 28.03.2022
(51) Int. Cl.: G06Q 10/02, G06Q 50/30, G08G 1/00, G01C 21/34

(54) **OFFER DEVICE AND METHOD FOR SELECTING A VEHICLE IN A VEHICLE DISPATCH SERVICE**

(30) Priority: 23.04.2021 JP 2021073465
(71) Applicant: TOYOTA JIDOSHA KABUSHIKI KAISHA, Toyota-shi, Aichi-ken, 471-8571 (JP)
(72) Inventor: YOKOYAMA, Daiki, Toyota-shi, 471-8571 (JP); CHIBA, Hiroya, Toyota-shi, 471-8571 (JP); KAGEURA, Yoshiyuki, Toyota-shi, 471-8571 (JP); SHIMADA, Masanori, Toyota-shi, 471-8571 (JP); SAKAYANAGI, Yoshihiro, Toyota-shi, 471-8571 (JP); MORITA, Hiroki, Toyota-shi, 471-8571 (JP)
(74) Representative: D Young & Co LLP

(57) **Abstract**

The offer device includes a vehicle offer part (35) configured to offer candidate vehicles for reservation to a user through a user terminal (4), and a possibility determining part (36) configured to determine a possibility of an area in which operation of an internal combustion engine is banned or restricted being included in a planned running route of the user. The vehicle offer part (35) is configured to determine an offer mode of the candidate vehicles for reservation based on the possibility.

## Description

### FIELD

The present invention relates to an offer device and offer method able to be used for vehicle selection in a vehicle dispatch service.

### BACKGROUND

In recent years, to reduce atmospheric pollution, in locations like cities where the amount of traffic is large, area have been set up in which operation of internal combustion engines when driving vehicles is banned or restricted. In such areas, basically "running in the EV mode" is performed where a vehicle is run powered by only a motor supplied with electricity from a battery.

In this regard, PTL 1 describes to stop an internal combustion engine and run a hybrid vehicle in the EV mode when it is judged the vehicle is inside an area of toughened air pollution prevention measures.

### [CITATION LIST]

### [PATENT LITERATURE]

[PTL 1] Japanese Unexamined Patent Publication No. 07-075210

### SUMMARY

### [TECHNICAL PROBLEM]

In this regard, a vehicle dispatch service in which vehicles are dispatched in response to requests of users has been spreading. When users utilize such vehicle dispatch service, they can select their desired vehicles from among the available candidate vehicles for reservation. However, if vehicles not suitable for running in the EV mode are dispatched to users, they would be difficult to run in the area where operation of internal combustion engines is banned or restricted and the range of driving by the user would be liable to be restricted.

Therefore, considering the above problem, an object of the present invention is to prompt a user to select a vehicle suitable for a planned running route of the user when a vehicle dispatch service is utilized by the user.

### [SOLUTION TO PROBLEM]

The summary of the present invention is as follows.
(1) An offer device used for selection of a vehicle in a vehicle dispatch service, comprising: a vehicle offer part configured to offer candidate vehicles for reservation to a user through a user terminal; and a possibility determining part configured to determine a possibility of an area in which operation of an internal combustion engine is banned or restricted being included in a planned running route of the user, wherein the vehicle offer part is configured to determine an offer mode of the candidate vehicles for reservation based on the possibility.
(2) The offer device described in above (1), wherein the vehicle offer part is configured to offer to the user EV mode compatible vehicles able to run in an EV mode of running powered by only a motor supplied with power from a battery with greater priority if the possibility is high compared to if the possibility is low.
(3) The offer device described in above (2), wherein the EV mode compatible vehicles are chargeable vehicles enabling the battery to be charged by an outside power source.
(4) The offer device described in above (2) or (3), wherein the vehicle offer part is configured to offer to the user EV mode compatible vehicles with a large remaining stored power of the battery with greater priority if the possibility is high compared to if the possibility is low.
(5) The offer device described in above (2) or (3), further comprising: a power calculating part configured to calculate a required amount of power for an EV mode compatible vehicle to run in the EV mode through the area included in the planned running route, wherein the EV mode compatible vehicles offered with greater priority to the user are vehicles with the remaining stored power of the battery equal to or greater than the required amount of power.
(6) The offer device described in above (4) or (5), further comprising a remaining battery power calculating part configured to calculate an estimated value of the remaining stored power of the battery at a usage start time of an EV mode compatible vehicle as the remaining stored power of the battery.
(7) The offer device described in above (6), wherein the remaining battery power calculating part is configured to calculate the estimated value based on an amount of power to be consumed in the EV mode compatible vehicle up to the usage start time and an amount of power able to be charged to the battery up to the usage start time.
(8) The offer device described in any one of above (2) to (7), wherein the possibility determining part is configured to determine the possibility based on information input to the user terminal when the user utilizes the vehicle dispatch service, and, the vehicle offer part is configured to offer to the user the EV mode compatible vehicles with greater priority if entry into the area is notified by the user compared to if entry into the area is not notified by the user.
(9) The offer device described in any one of above (1) to (7), wherein the possibility determining part is configured to determine the possibility based on information input to the user terminal when the user utilizes the vehicle dispatch service.
(10) The offer device described in any one of above (1) to (7), wherein the possibility determining part is configured to determine the possibility based on a running history of the user when the user has utilized the vehicle dispatch service in the past.
(11) An offer method used for selection of a vehicle in a vehicle dispatch service, including: determining a possibility of an area in which operation of an internal combustion engine is banned or restricted being included in a planned running route of the user; determining an offer mode of the candidate vehicles for reservation based on the possibility; and offering to the user candidate vehicles for reservation through a user terminal based on the offer mode. Advantageous Effects of Invention

According to the present invention, it is possible to prompt a user to select a vehicle suitable for a planned running route of the user when a vehicle dispatch service is utilized by the user.

### BRIEF DESCRIPTION OF DRAWINGS

FIG. 1 is a schematic view of the configuration of a vehicle dispatch system.
FIG. 2 is a view schematically showing the configuration of a server.
FIG. 3 is a sequence diagram schematically showing the series of steps in the flow when dispatching a vehicle in a vehicle dispatch service.
FIG. 4 is a functional block diagram of a processor of the server in a first embodiment.
FIG. 5 is a flow chart showing a control routine of processing for offering vehicles.
FIG. 6 is a view showing one example of a reservation screen for a user to reserve a vehicle.
FIG. 7 is a view showing one example of a vehicle selection screen in which EV mode compatible vehicles are emphasized over EV mode incompatible vehicles.
FIG. 8 is a functional block diagram of a processor of the server in a third embodiment.
FIG. 9 is a view showing one example of a vehicle selection screen in which EV mode compatible vehicles in which a remaining stored power of the battery is equal to or greater than a required amount of power are emphasized over other vehicles.

### DESCRIPTION OF EMBODIMENTS

Below, referring to the drawings, embodiments of the present invention will be explained. Note that, in the following explanation, similar component elements will be assigned the same reference notations.

### <First Embodiment

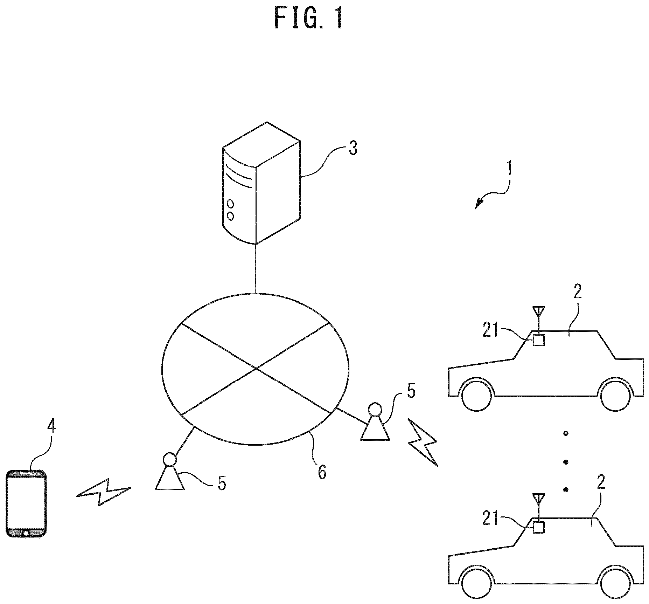

First, referring to FIG. 1 to FIG. 7, a first embodiment of the present invention will be explained.

FIG. 1 is a schematic view of the configuration of a vehicle dispatch system 1. As shown in FIG. 1, the vehicle dispatch system 1 is provided with a plurality of vehicles 2, a server 3, and a user terminal 4. The vehicle dispatch system 1 provides a vehicle dispatch service dispatching vehicles in response to requests from users. Note that, a "vehicle dispatch service" is defined here as including all of car sharing services in which cars standing by at parking lots are used by a plurality of the user in turn, rent-a-car services in which cars are rented to users from manned stores, taxi services picking up users at desired pickup locations of the users, etc.

The plurality of vehicles 2 are owned by the provider of the vehicle dispatch service. A vehicle 2 to be provided to a user at the vehicle dispatch service is selected from among the plurality of vehicles 2. Each of the plurality of vehicles 2 is provided with a communication device 21 (for example, data communication module (DCM)) enabling communication between the vehicle 2 and the outside of the vehicle 2. The communication device 21 accesses a wireless base station 5 whereby it is connected to a communication network 6 through the wireless base station 5. The vehicle 2 transfers data with the server 3 through the communication device 21. Note that, the plurality of vehicles 2 may be directly connected to the communication network 6 without going through a wireless base station 5.

In the present embodiment, the plurality of vehicles 2 include EV mode compatible vehicles able to be run in the EV mode where the vehicle runs powered by only a motor supplied with electricity from a battery and EV mode incompatible vehicles not able to be run in the EV mode. As EV mode compatible vehicles, hybrid vehicles (HV) and plug-in hybrid vehicles (PHV) provided with engines and motors as power sources of the vehicles and electric vehicles (EV) provided with only motors as power sources may be mentioned. On the other hand, as EV mode incompatible vehicles, conventional vehicles provided with only engines as power sources of the vehicles (gasoline vehicles, diesel vehicles, etc.) may be mentioned.

The user terminal 4 is, for example, a smartphone, tablet terminal, personal computer, etc. and is possessed by the user. The user terminal 4 has a processor for performing various processing on the user terminal 4, an input part (touch panel, operating buttons, microphone, keyboard, mouse, etc.), an output part (display, speaker, etc.), and a communication part. The communication part accesses a wireless base station 5 to be connected to a communication network 6 through the wireless base station 5. The user terminal 4 transfers data with the server 3 through the communication part. Note that, the user terminal 4 may be directly connected to the communication network 6 without going through a wireless base station 5.

When utilizing the vehicle dispatch service, the user requests dispatch of a vehicle through the user terminal 4. For example, the user terminal 4 has installed in it a vehicle dispatch service application. The user uses the application for input regarding the vehicle dispatch service.

The server 3 can communicate with the plurality of vehicles 2 and the user terminal 4 through the communication network 6 and the wireless base station 5. The server 3 is one example of an offer device used for vehicle selection in the vehicle dispatch service. The server 3 is managed by a business providing the vehicle dispatch service.

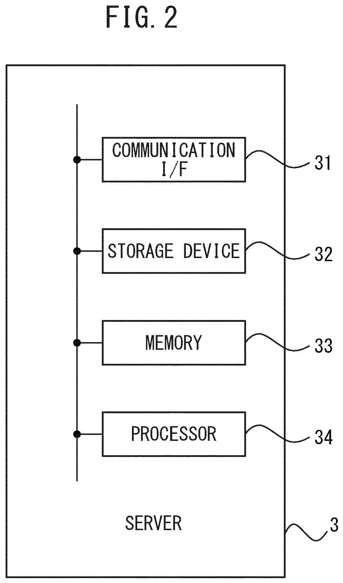

FIG. 2 is a view schematically showing the configuration of the server 3. The server 3 is provided with a communication interface 31, a storage device 32, a memory 33, and a processor 34. The communication interface 31, the storage device 32, and the memory 33 are connected through signal wires to the processor 34. Note that, the server 3 may further be provided with a keyboard and mouse or other such input devices and a display or other such output devices etc. Further, the server 3 may be configured by a plurality of computers.

The communication interface 31 has an interface circuit for connecting the server 3 to the communication network 6 and enables communication between the server 3 and the outside of the server 3. The communication interface 31 is one example of a communication part of the server 3.

The storage device 32, for example, has a hard disk drive (HDD), solid state drive (SSD), or optical recording medium and its access device. The storage device 32 stores various types of data, for example, information relating to vehicles 2, information relating to users, map information (positions of later explained restricted engine operation areas etc.), computer programs for the processor 34 to perform various processing, etc. The storage device 32 is one example of a storage part of the server 3.

The memory 33 is a nonvolatile semiconductor memory (for example, a RAM). The memory 33, for example, temporarily stores various data used for various processing to be performed by the processor 34. The memory 33 is one example of a storage part of the server 3.

The processor 34 has one or more CPUs and their peripheral circuits and performs various processing. Note that, the processor 34 may further have a logic unit, an arithmetic unit, or a graphic unit or other such processing circuit.

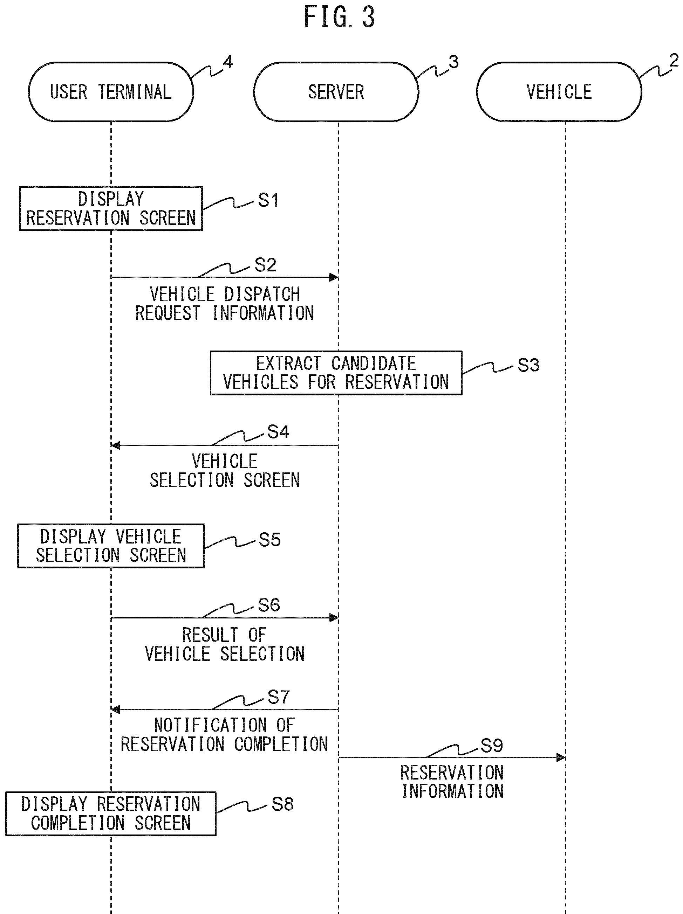

FIG. 3 is a sequence diagram schematically showing the series of steps in the flow when dispatching a vehicle in a vehicle dispatch service. In this sequence diagram, communication between the user terminal 4 and the server 3 and communication between the server 3 and the vehicles 2 are performed through the communication network 6 and the wireless base station 5.

If the user launches the vehicle dispatch service application or accesses a web site relating to the vehicle dispatch service, the user terminal 4 displays a reservation screen for the user to reserve a vehicle. The reservation screen is provided with fields for input of matters required for vehicle dispatch (desired pickup point, usage start time, usage end time, etc.) The user operates the user terminal 4 to input the necessary matter into the user terminal 4. Note that, a map showing the positions of predetermined pickup points may be displayed on the user terminal 4, and the user may designate a pickup point on the map to input the desired pickup point.

After the necessary matter has finished being input, the user terminal 4 sends vehicle dispatch request information to the server 3 (step S2). The vehicle dispatch request information includes the desired pickup point, usage start time, usage end time, user information (user ID etc.), etc. The user information is registered in advance by the user through the user terminal 4.

If vehicle dispatch request information is sent from the user terminal 4 to the server 3, the server 3 extracts candidate vehicles for reservation from among the plurality of vehicles 2 based on the vehicle dispatch request information (step S3). Further, the server 3 sends a vehicle selection screen including the information of candidate vehicles for reservation to the user terminal 4 (step S4).

If the vehicle selection screen is sent from the server 3 to the user terminal 4, the user terminal 4 displays the vehicle selection screen (step S5). At the vehicle selection screen, candidate vehicles for reservation are offered to the user. The user selects the desired vehicle for use from among the candidate vehicles for reservation.

If the user selects a vehicle for use, the user terminal 4 sends the result of vehicle selection to the server 3 (step S6). As a result, the reservation of the vehicle for use is established, and the server 3 sends a notification of reservation completion to the user terminal 4 (step S7). If a notification of reservation completion is sent from the server 3 to the user terminal 4, the user terminal 4 displays a reservation completion screen (step S8). Further, the server 3 sends reservation information to the vehicle 2 reserved as the vehicle for use (step S9). The reservation information includes the usage start time, the user information (user ID etc.) etc. After that, starting from the usage start time, the user can use the user terminal 4 or a credit card to verify his identity and pick up the vehicle for use.

In the above way, when the user utilizes a vehicle dispatch service, he can select the desired vehicle for use from among the candidate vehicles for reservation. However, if considering the planned running route of the user, the features of some of the vehicles are liable to not match the user needs. For example, a case where the planned running route of the user includes an area in which operation of an internal combustion engine is banned or restricted when driving the vehicle (below, referred to as a "restricted engine operation area") may be considered. Note that, a restricted engine operation area is also called a "low emission zone (LEZ)".

If an internal combustion engine is operated in such a restricted engine operation area, the driver of the vehicle will receive a fine etc. For this reason, if the planned running route of the user includes a restricted engine operation area, it is desirable that a vehicle capable of running in the EV mode be dispatched. Therefore, in the present embodiment, when a user utilizes a vehicle dispatch service, the mode of offer of the candidate vehicles for reservation is determined considering the possibility of the planned running route of the user including a restricted engine operation area. Such processing is performed by the processor 34 of the server 3 in the following way.

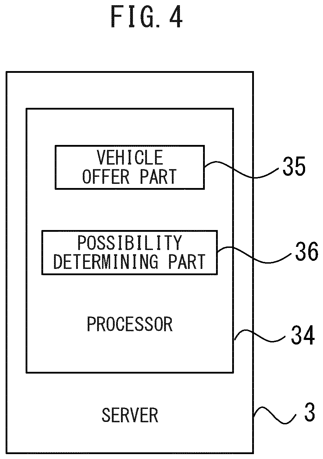

FIG. 4 is a functional block diagram of the processor 34 of the server 3 in the first embodiment. In the present embodiment, the processor 34 has a vehicle offer part 35 and a possibility determining part 36. The vehicle offer part 35 and the possibility determining part 36 are functional modules realized by a computer program stored in the storage device 32 of the server 3 being run by the processor 34 of the server 3. Note that, the vehicle offer part 35 and the possibility determining part 36 may be realized by dedicated processing circuits provided at the processor 34.

The vehicle offer part 35 generates a vehicle selection screen for the user to select the desired vehicle for use from among the candidate vehicles for reservation and sends the vehicle selection screen including information of candidate vehicles for reservation to the user terminal 4. That is, the vehicle offer part 35 offers candidate vehicles for reservation to the user through the user terminal 4.

The possibility determining part 36 determines the possibility of a restricted engine operation area being included in the planned running route of the user (below, referred to as the "possibility of entry into a restricted engine operation area"). Based on the possibility of entry into a restricted engine operation area determined by the possibility determining part 36, the vehicle offer part 35 determines the offer mode of the candidate vehicles for reservation when generating a vehicle selection screen. By doing this, when a vehicle dispatch service is utilized by a user, the user can be prompted to select a vehicle suitable for the planned running route of the user.

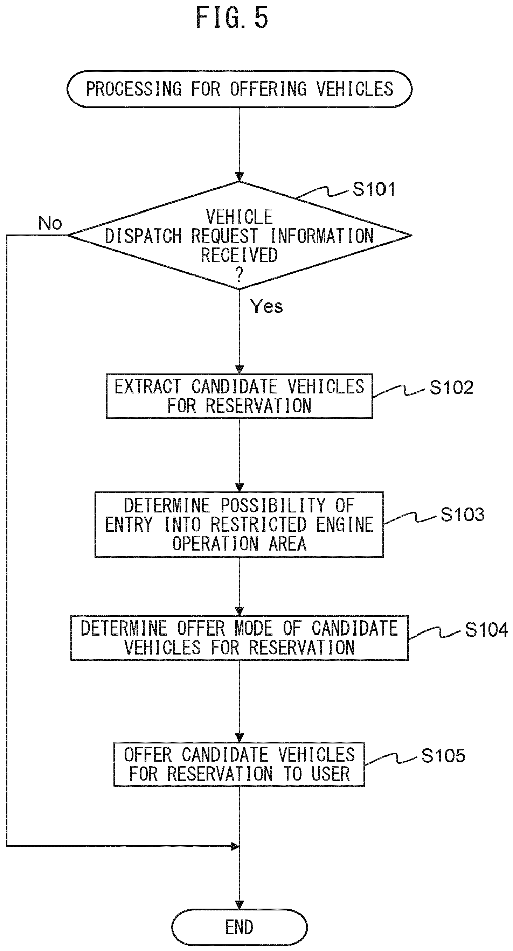

FIG. 5 is a flow chart showing a control routine of processing for offering vehicles. The present control routine is repeatedly performed by the processor 34 of the server 3 at predetermined intervals.

First, at step S101, the vehicle offer part 35 judges whether vehicle dispatch request information has been received. The vehicle dispatch request information is sent from the user terminal 4 to the server 3 in accordance with an operation by the user desiring to utilize the vehicle dispatch service. The vehicle dispatch request information includes the desired pickup point, usage start time, usage end time, user information (user ID etc.) etc. If it is judged that vehicle dispatch request information has not been received, the present control routine ends. On the other hand, if it is judged that vehicle dispatch request information has been received, the present control routine proceeds to step S102.

At step S102, the vehicle offer part 35 extracts candidate vehicles for reservation from among the plurality of vehicles 2 based on the vehicle dispatch request information. Specifically, the vehicle offer part 35 extracts as candidate vehicles for reservation the vehicles 2 which are standing by at the desired pickup point of the user or which can be moved to the desired pickup point before the usage start time and which have not been reserved for the period from the usage start time to the usage end time. Note that, if specific vehicles 2 have been deployed as vehicle dispatch service vehicles at each predetermined pickup point (parking lots such as coin-operated parking lots, stores, etc.), the candidate vehicles for reservation are extracted from among the specific vehicles 2 deployed at the desired pickup point of the user.

Next, at step S103, the possibility determining part 36 determines the possibility of entry into a restricted engine operation area. For example, the possibility determining part 36 determines the possibility of entry into a restricted engine operation area based on information input to the user terminal 4 when a user is utilizing the vehicle dispatch service. As a specific example, the possibility determining part 36 determines the possibility of entry into a restricted engine operation area based on the positional relationship between a desired pickup point input into the user terminal 4 and the restricted engine operation area. In this case, the possibility determining part 36 raises possibility of entry into a restricted engine operation area the closer the distance to the boundary between the desired pickup point and the restricted engine operation area and makes the possibility of entry into a restricted engine operation area 100% if the desired pickup point is positioned inside a restricted engine operation area.

Further, if the reservation screen displayed on the user terminal 4 is provided with a field for input of the destination, the possibility determining part 36 may determine the possibility of entry into a restricted engine operation area based on the positional relationship between the desired pickup point and the destination input into the user terminal 4, and the restricted engine operation area. In this case, the possibility determining part 36 raises the possibility of entry into a restricted engine operation area if the running route connecting the desired pickup point and the destination includes a restricted engine operation area and makes the possibility of entry into a restricted engine operation area 100% if the desired pickup point or destination is positioned inside a restricted engine operation area.

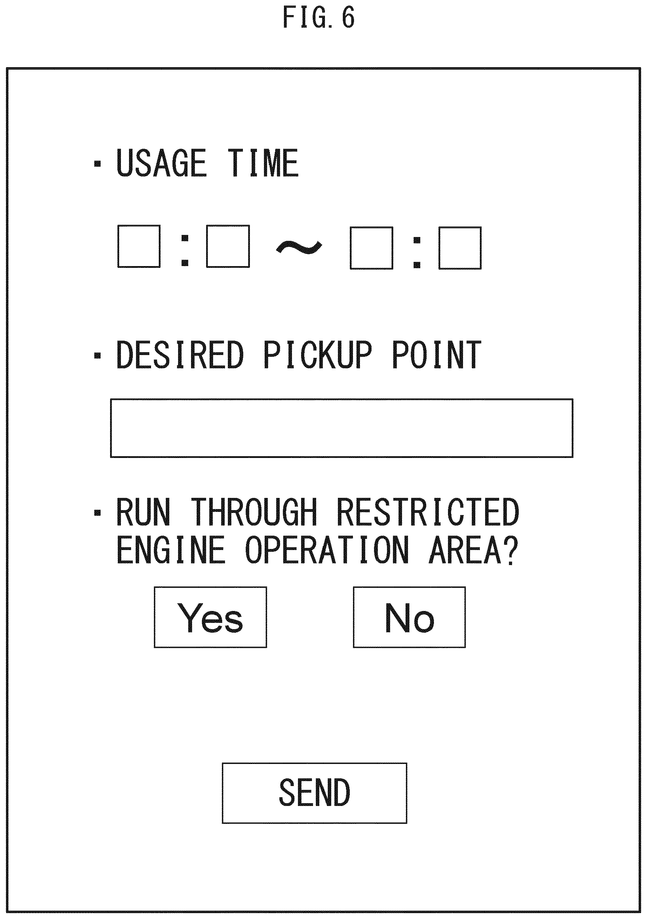

Further, the reservation screen may be provided with a field for input relating to the planned running route of the user and whether or not to entry a restricted engine operation area may be notified by the user in advance. In this case, a reservation screen such as shown in FIG. 6 is displayed at the user terminal 4, the user inputs whether or not to entry a restricted engine operation area at the user terminal 4, and this information is sent to the server 3 as vehicle dispatch request information. If entry into a restricted engine operation area is notified, the possibility determining part 36 increases the possibility of entry into a restricted engine operation area (for example, to 90 to 100%), while if entry into a restricted engine operation area is not notified, decreases the possibility of entry into a restricted engine operation area (for example, to 0 to 10%).

Further, the possibility determining part 36 may calculate the possibility of entry into a restricted engine operation area based on the running history of a user when the user has utilized the vehicle dispatch service in the past. The running history of users, for example, includes running routes generated based on the position information of vehicles 2 acquired during utilization of the vehicle dispatch service and is stored in the storage device 32 of the server 3 for each user. Position information of each vehicle 2 is acquired by a GPS receiver provided at the vehicle 2 etc. and is periodically sent from the vehicle 2 to the server 3. The possibility determining part 36, for example, calculates a ratio of a number of times of entry into a restricted engine operation area with respect to a number of times of utilization of the vehicle dispatch service as the possibility of entry into a restricted engine operation area (possibility of entry=100×times of entry/times of utilization). In this case, the possibility of entry into a restricted engine operation area may be calculated for each pickup point which the user has utilized.

Note that, the possibility of entry into a restricted engine operation area does not necessarily have to be calculated as a specific numerical value. For example, the possibility determining part 36 may set the possibility of entry into a restricted engine operation area as two levels (large or small) or three levels (large, medium, or small).

After step S103, at step S104, the vehicle offer part 35 determines the offer mode of the candidate vehicles for reservation based on the possibility of entry into a restricted engine operation area determined by the possibility determining part 36. Specifically, the vehicle offer part 35 offers to the user EV mode compatible vehicles with greater priority if the possibility of entry into a restricted engine operation area is high compared to if the possibility of entry into a restricted engine operation area is low. For example, the vehicle offer part 35 offers EV mode compatible vehicles with greater priority if entry into a restricted engine operation area has been notified by the user compared to if entry into a restricted engine operation area has not been notified by the user. By doing this, when the possibility of entry into a restricted engine operation area is high, the user can be prompted to select an EV mode compatible vehicle as the vehicle for use.

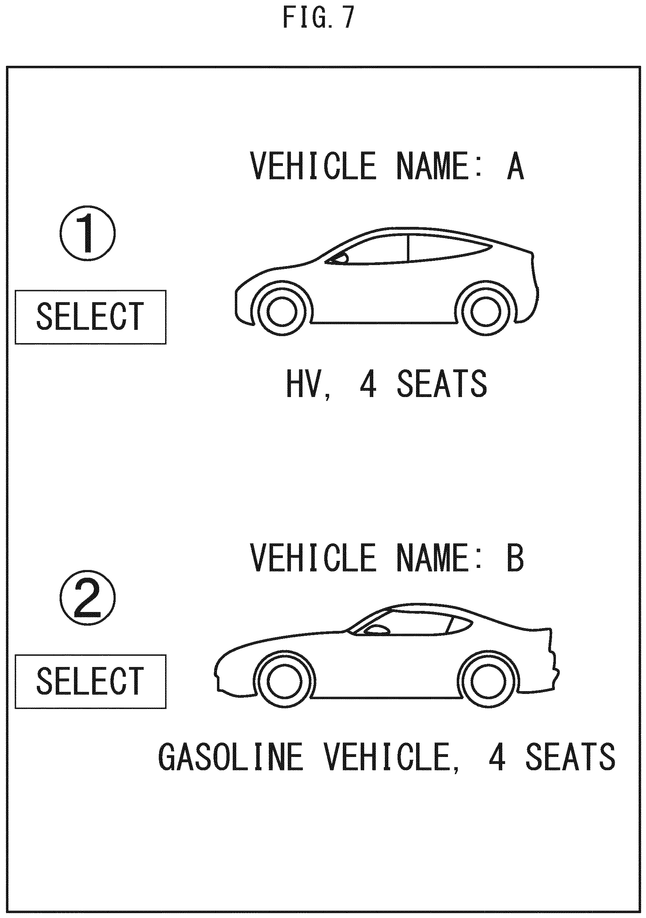

As a specific example, the vehicle offer part 35 displays the candidate vehicles for reservation on the user terminal 4 so that EV mode compatible vehicles are displayed emphasized more than EV mode incompatible vehicles if the possibility of entry into a restricted engine operation area is high compared to if the possibility of entry into a restricted engine operation area is low. If emphasizing the EV mode compatible vehicles more than the EV mode incompatible vehicles, the vehicle offer part 35, for example, displays the EV mode compatible vehicles before the EV mode incompatible vehicles, makes the numbers assigned to the EV mode compatible vehicles (priority order) smaller than the numbers assigned to the EV mode incompatible vehicles, or makes the display strength of the EV mode compatible vehicles (brightness, lightness, saturation, etc.) greater than the display strength of the EV mode incompatible vehicles. FIG. 7 is a view showing one example of a vehicle selection screen in which EV mode compatible vehicles (HV) are emphasized over EV mode incompatible vehicles. Note that, if the possibility of entry into a restricted engine operation area is equal to or greater than a predetermined value (for example, 60 to 80%), the vehicle offer part 35 may display only the EV mode compatible vehicles as candidate vehicles for reservation on the user terminal 4.

On the other hand, the vehicle offer part 35 may offers EV mode incompatible vehicles to the users with greater priority if the possibility of entry into a restricted engine operation area is low compared to if the possibility of entry into a restricted engine operation area is high. By doing this, a user can be prompted to select an EV mode incompatible vehicle as the vehicle for use when the possibility of entry into a restricted engine operation area is low, and therefore EV mode compatible vehicles can be secured for users with a high possibility of entry into a restricted engine operation area.

As a specific example, the vehicle offer part 35 displays candidate vehicles for reservation on the user terminal 4 so that EV mode incompatible vehicles are emphasized over EV mode compatible vehicles if the possibility of entry into a restricted engine operation area is low compared to if the possibility of entry into a restricted engine operation area is high. Note that, if the possibility of entry into a restricted engine operation area is equal to or less than a predetermined value (for example 20 to 40%), the vehicle offer part 35 may display only EV mode incompatible vehicles as candidate vehicles for reservation on the user terminal 4.

Next, at step S105, the vehicle offer part 35 offers candidate vehicles for reservation to the user through the user terminal 4 based on the offer mode of the candidate vehicles for reservation determined at step SI04. As the specific processing, the vehicle offer part 35 generates a vehicle selection screen in accordance with the offer mode of the candidate vehicles for reservation determined at step S104 and sends the vehicle selection screen to the user terminal 4. After step S105, the present control routine ends.

### <Second Embodiment

The configuration and control of the offer device according to a second embodiment are basically similar to the configuration and control of the offer device according to the first embodiment except for the points explained below. For this reason, below, the second embodiment of the present invention will be explained centered on the parts different from the first embodiment.

If the planned running route of a user includes a restricted engine operation area, to avoid running out of power in the restricted engine operation area, it is desirable that the battery be able to be charged by an outside power source. For this reason, in the second embodiment, the vehicle offer part 35 offers to the user chargeable vehicles enabling a battery to be charged by an outside power source among the EV mode compatible vehicles with greater priority if the possibility of entry into a restricted engine operation area is high compared to if the possibility of entry into a restricted engine operation area is low. By doing this, when a vehicle dispatch service is utilized by a user, it is possible to prompt the user to select a vehicle more suitable for the planned running route of the user. As a chargeable vehicle, plug-in hybrid vehicles (PHV) and electric vehicles (EV) may be mentioned. As nonchargeable vehicles not having a battery able to be charged by an outside power source, hybrid vehicles (HV) and conventional vehicles (gasoline vehicles, diesel vehicles, etc.) may be mentioned.

As a specific example, the vehicle offer part 35 displays the candidate vehicles for reservation at the user terminal 4 so that chargeable vehicles are emphasized over nonchargeable vehicles if the possibility of entry into a restricted engine operation area is high compared to if the possibility of entry into a restricted engine operation area is low. Note that, the vehicle offer part 35 may display only the chargeable vehicles as candidate vehicles for reservation at the user terminal 4 if the possibility of entry into a restricted engine operation area is equal to or greater than a predetermined value (for example, 60 to 80%).

In the second embodiment, in the same way as the first embodiment, the control routine of processing for offering vehicles of FIG. 5 is performed. If the possibility of entry into a restricted engine operation area is high, at step S104, the offer mode of the candidate vehicles for reservation is determined in the above way.

### <Third Embodiment

The configuration and control of the offer device according to a third embodiment are basically similar to the configuration and control of the offer device according to the first embodiment except for the points explained below. For this reason, below, the third embodiment of the present invention will be explained centered on the parts different from the first embodiment.

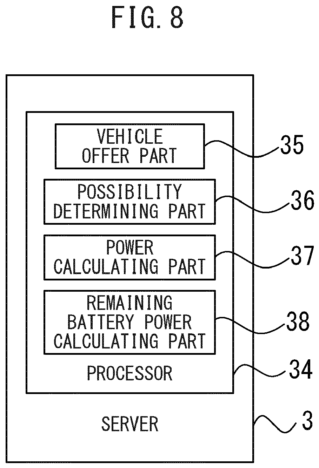

FIG. 8 is a functional block diagram of the processor 34 of the server 3 in the third embodiment. In the third embodiment, the processor 34 has a vehicle offer part 35 and a possibility determining part 36 plus a power calculating part 37 and remaining battery power calculating part 38. The vehicle offer part 35, the possibility determining part 36, the power calculating part 37, and the remaining battery power calculating part 38 are functional modules realized by a computer program stored in the storage device 32 of the server 3 being run by the processor 34 of the server 3. Note that, these functional modules may be realized by dedicated processing circuits provided at the processor 34.

The power calculating part 37 calculates the required amount of power (for example, required SOC (state of charge) of the battery) for an EV mode compatible vehicle to run along a predetermined route without operating the internal combustion engine. In other words, the power calculating part 37 calculates the required amount of power for an EV mode compatible vehicle to run along a predetermined route in the EV mode. For example, the power calculating part 37 calculates the required amount of power based on a distance along a predetermined route. Note that, the power calculating part 37 may calculate the required amount of power based on the distance along the predetermined route and the average speed of the EV mode compatible vehicle when running along the predetermined route. Further, the power calculating part 37 may calculate the required amount of power based on the amount of power consumed when EV mode compatible vehicles ran along the predetermined route in the past

If the planned running route of the user includes a restricted engine operation area, it is necessary to avoid as much as possible the power of the battery running out in the restricted engine operation area. For this reason, in the third embodiment, the power calculating part 37 calculates the required amount of power for an EV mode compatible vehicle to run in the EV mode along a restricted engine operation area included in the planned running route of the user. The running route in the restricted engine operation area is, for example, estimated based on the running history of the user or is set to a route predetermined for each restricted engine operation area (for example, the most typical running route when passing through the restricted engine operation area etc.)

Further, the vehicle offer part 35 offers to the user the EV mode compatible vehicles with a remaining stored power of the battery (for example, the SOC of the battery) of equal to or greater than the required amount of power with greater priority if the possibility of entry into a restricted engine operation area is high compared to if the possibility of entry into a restricted engine operation area is low. By doing this, it is possible to prompt the user to select an EV mode compatible vehicle with a remaining stored power of the battery of equal to or greater than the required amount of power as the vehicle for use and possible to keep the power of the battery for running in the EV mode from running out in a restricted engine operation area.

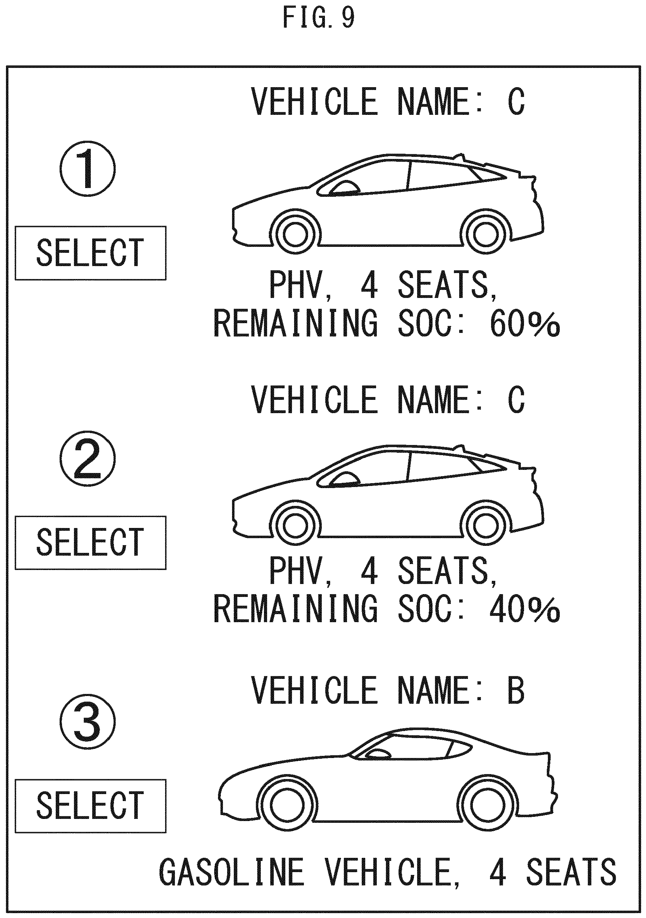

As a specific example, the vehicle offer part 35 displays candidate vehicles for reservation at the user terminal 4 so that EV mode compatible vehicles with a remaining stored power of the battery of equal to or greater than the required amount of power are emphasized over EV mode compatible vehicles with a remaining stored power of the battery of less than the required amount of power and over EV mode incompatible vehicles if the possibility of entry into a restricted engine operation area is high compared to if the possibility of entry into a restricted engine operation area is low. FIG. 9 is a view showing one example of a vehicle selection screen in which EV mode compatible vehicles with a remaining stored power of the battery of equal to or greater than the required amount of power (in this example, 50% SOC) are emphasized over EV mode compatible vehicles with a remaining stored power of the battery of less than the required amount of power and over EV mode incompatible vehicles. Note that, if the possibility of entry into a restricted engine operation area is equal to or greater than a predetermined value (for example, 60 to 80%), the vehicle offer part 35 may display at the user terminal 4 only EV mode compatible vehicles with a remaining stored power of the battery of equal to or greater than the required amount of power as candidate vehicles for reservation.

Further, in the third embodiment, the remaining battery power calculating part 38 calculates the estimated value of the remaining stored power of the battery at the usage start time of each of the EV mode compatible vehicles (below, referred to as the "initial estimated value") as the remaining stored power of the battery. That is, the vehicle offer part 35 uses the initial estimated value calculated by remaining battery power calculating part 38 as the remaining stored power of the battery. That is, the vehicle offer part 35 offers to the user the EV mode compatible vehicles with an initial estimated value of equal to or greater than the required amount of power with greater priority if the possibility of entry into a restricted engine operation area is high compared to if the possibility of entry into a restricted engine operation area is low.

For example, the remaining battery power calculating part 38 calculates the initial estimated value at each EV mode compatible vehicle based on the amount of power consumed up to the usage start time (below, referred to as the "consumed amount of power") and the power able to be charged to the battery up to the usage start time (below, referred to as the "chargeable amount of power"). Specifically, the remaining battery power calculating part 38 calculates the initial estimated value by adding to the remaining stored power of the battery at the point of time when the vehicle dispatch request information was sent from the user terminal 4 to the server 3 (reservation time) the consumed amount of power (negative value) and the chargeable amount of power (positive value). For example, the remaining battery power calculating part 38 calculates the initial estimated value by adding to the SOC of the battery at the reservation time the amount of change of the SOC corresponding to the consumed amount of power (negative value) and the amount of change of the SOC corresponding to the chargeable amount of power (positive value). Note that, the current value of the remaining stored power of the battery (for example, the SOC of the battery) is calculated by a known method for each EV mode compatible vehicle and is periodically sent from each EV mode compatible vehicle to the server 3.

If an EV mode compatible vehicle is being used by another user, the remaining battery power calculating part 38 calculates the consumed amount of power based on the current position of the EV mode compatible vehicle and the desired pickup point of the user, the outside air temperature, etc. Note that, if an EV mode compatible vehicle will not be moved up to the usage start time, that is, if an EV mode compatible vehicle has been standing by at the desired pickup point of the user until the usage start time, the consumed amount of power is made zero. Further, if an EV mode compatible vehicle (chargeable vehicle) can be charged by an outside power source provided at the desired pickup point etc., the remaining battery power calculating part 38 calculates the chargeable amount of power based on the charging capacity of the outside power source (for example, the chargeable output), predicted charging time, etc. Note that, if an EV mode compatible vehicle is a nonchargeable vehicle or if a battery of an EV mode compatible vehicle (chargeable vehicle) will not be charged before the usage start time, the chargeable amount of power is made zero.

In the third embodiment, in the same way as the first embodiment, the control routine of processing for offering vehicles of FIG. 5 is performed. If the possibility of entry into a restricted engine operation area is high, at step S104, the offer mode of the candidate vehicles for reservation is determined in the above way.

Note that, in the third embodiment, the power calculating part 37 may be omitted and the vehicle offer part 35 may offer to the user the EV mode compatible vehicles with the larger remaining stored power of the battery with greater priority if the possibility of entry into a restricted engine operation area is high compared to if the possibility of entry into a restricted engine operation area is low. By doing this, it is possible to prompt the user to select an EV mode compatible vehicle with a large remaining stored power of the battery as the vehicle for use and possible to keep the power of the battery for running in the EV mode from running out in a restricted engine operation area.

As a specific example, if the possibility of entry into a restricted engine operation area is equal to or greater than a predetermined value (for example, 60 to 80%), the vehicle offer part 35 offers to the user the candidate vehicles for reservation in the order of the largest remaining stored power of the battery down. Note that, in this case, the remaining stored power of the battery of the EV mode incompatible vehicles is set to zero. Further, if the possibility of entry into a restricted engine operation area is equal to or greater than a predetermined value (for example, 60 to 80%), the vehicle offer part 35 may display candidate vehicles for reservation at the user terminal 4 so that EV mode compatible vehicles with a remaining stored power of the battery of a predetermined amount or more are emphasized over EV mode compatible vehicles with a remaining stored power of the battery of less than a predetermined amount and over EV mode incompatible vehicles. Further, if the possibility of entry into a restricted engine operation area is equal to or greater than a predetermined value (for example, 60 to 80%), the vehicle offer part 35 may display only EV mode compatible vehicles with the maximum remaining stored power of the battery or EV mode compatible vehicles with a remaining stored power of the battery of equal to or greater than a predetermined amount at the user terminal 4 as candidate vehicles for reservation.

Further, in the third embodiment, the remaining battery power calculating part 38 may be omitted and the vehicle offer part 35 may use as the remaining stored power of the battery the remaining stored power of the battery at the time the vehicle dispatch request information is sent from the user terminal 4 to the server 3 (for example, the SOC of the battery).

### <Other Embodiments>

Above, preferred embodiments according to the present invention were explained, but the present invention is not limited to these embodiments and can be corrected and changed in various ways within the language of the claims. For example, the vehicle offer part 35 may determine the optimal vehicles 2 (EV mode compatible vehicles or EV mode incompatible vehicles) based on the possibility of entry into a restricted engine operation area and display only the optimal vehicles 2 as a candidate vehicle for reservation at the user terminal 4.

Further, the vehicles 2 able to be used for the vehicle dispatch service may be automated driving vehicles in which all of the acceleration, steering, and deceleration (braking) of the vehicles 2 are automatically controlled. In this case, the vehicle 2 selected as the vehicle for use moves to the desired pickup point designated by the user by autonomous running.

Further, the above-mentioned embodiments can be worked combined in any way. For example, the vehicle offer part 35 may offer to the user chargeable vehicles with remaining stored power of the battery (for example, the SOC of the battery) of equal to or greater than a required amount of power with greater priority if the possibility of entry into a restricted engine operation area is high compared to if the possibility of entry into a restricted engine operation area is low. Further, the vehicle offer part 35 may offer to the user chargeable vehicles with larger remaining stored power of the battery with greater priority if the possibility of entry into a restricted engine operation area is high compared to if the possibility of entry into a restricted engine operation area is low.

### REFERENCE SIGNS LIST

1. vehicle dispatch system
2. vehicle
3. server
34. processor
35. vehicle offer part
36. possibility determining part
4. user terminal

## Claims

1. An offer device used for selection of a vehicle in a vehicle dispatch service, comprising:
a vehicle offer part (35) configured to offer candidate vehicles for reservation to a user through a user terminal (4); and
a possibility determining part (36) configured to determine a possibility of an area in which operation of an internal combustion engine is banned or restricted being included in a planned running route of the user, wherein
the vehicle offer part (35) is configured to determine an offer mode of the candidate vehicles for reservation based on the possibility.

2. The offer device according to claim 1, wherein the vehicle offer part (35) is configured to offer to the user EV mode compatible vehicles able to run in an EV mode of running powered by only a motor supplied with power from a battery with greater priority if the possibility is high compared to if the possibility is low.

3. The offer device according to claim 2, wherein the EV mode compatible vehicles are chargeable vehicles enabling the battery to be charged by an outside power source.

4. The offer device according to claim 2 or 3, wherein the vehicle offer part (35) is configured to offer to the user EV mode compatible vehicles with a large remaining stored power of the battery with greater priority if the possibility is high compared to if the possibility is low.

5. The offer device according to claim 2 or 3, further comprising:
a power calculating part (37) configured to calculate a required amount of power for an EV mode compatible vehicle to run in the EV mode through the area included in the planned running route, wherein
the EV mode compatible vehicles offered with greater priority to the user are vehicles with the remaining stored power of the battery equal to or greater than the required amount of power.

6. The offer device according to claim 4 or 5, further comprising a remaining battery power calculating part (38) configured to calculate an estimated value of the remaining stored power of the battery at a usage start time of an EV mode compatible vehicle as the remaining stored power of the battery.

7. The offer device according to claim 6, wherein the remaining battery power calculating part (38) is configured to calculate the estimated value based on an amount of power to be consumed in the EV mode compatible vehicle up to the usage start time and an amount of power able to be charged to the battery up to the usage start time.

8. The offer device according to any one of claims 2 to 7, wherein
the possibility determining part (36) is configured to determine the possibility based on information input to the user terminal (4) when the user utilizes the vehicle dispatch service, and,
the vehicle offer part (35) is configured to offer to the user the EV mode compatible vehicles with greater priority if entry into the area is notified by the user compared to if entry into the area is not notified by the user.

9. The offer device according to any one of claims 1 to 7, wherein the possibility determining part (36) is configured to determine the possibility based on information input to the user terminal (4) when the user utilizes the vehicle dispatch service.

10. The offer device according to any one of claims 1 to 7, wherein the possibility determining part (36) is configured to determine the possibility based on a running history of the user when the user has utilized the vehicle dispatch service in the past.

11. An offer method used for selection of a vehicle in a vehicle dispatch service, including:
determining a possibility of an area in which operation of an internal combustion engine is banned or restricted being included in a planned running route of the user;
determining an offer mode of the candidate vehicles for reservation based on the possibility; and
offering to the user candidate vehicles for reservation through a user terminal (4) based on the offer mode.
